# NEUE EUROPÄISCHE PATENTSCHRIFT

(11) **EP 1 782 936 B2**
(45) Veröffentlichungstag und Bekanntmachung des Hinweises auf die Entscheidung über den Einspruch: **13.02.2013**
(45) Hinweis auf die Patenterteilung: 25.03.2009
(21) Anmeldenummer: 06022596.8
(22) Anmeldetag: 30.10.2006
(51) Int. Cl.: B29C 45/16

(54) **Spritzgießvorrichtung**
Injection moulding apparatus
Dispositif de moulage par injection

(30) Priorität: 03.11.2005 DE 102005052418
(43) Veröffentlichungstag der Anmeldung: 09.05.2007
(73) Patentinhaber: Gebr. Krallmann GmbH, 32120 Hiddenhausen (DE)
(72) Erfinder: Kaczmarek, Ulrich, 79312 Emmendingen (DE)
(74) Vertreter: Lasch, Hartmut

(56) Entgegenhaltungen:
- WO-A-02/13656
- DE-A1- 4 400 649
- DE-A1- 10 121 691
- DE-C2- 4 127 621
- JP-A- 63 135 214
- US-A1- 2006 153 947

## Beschreibung

Die Erfindung betrifft eine Spritzgießvorrichtung mit einem Etagenwerkzeug gemäß dem Oberbegriff des Anspruchs 1.

Eine entsprechende Spritzgießvorrichtung ist in der DE 101 21 691 A1 beschrieben und dient zur gleichzeitigen Herstellung einer Vielzahl von Kunststoff-Spritzgussteilen, die jeweils in aufeinanderfolgenden Schritten aus mehreren Kunststoff-Komponenten hergestellt werden. Insbesondere ist eine entsprechenden Spritzgießvorrichtung zur Herstellung von Zahnbürsten geeignet, wovon im Folgenden beispielhaft ausgegangen werden soll.

Das Etagenwerkzeug einer entsprechenden Spritzgießvorrichtung besitzt einen ersten äußeren Formblock, einen Mittelblock und einen zweiten äußeren Formblock. Der Mittelblock ist zwischen den beiden äußeren Formblöcken angeordnet und alle drei Blöcke können relativ zueinander zwischen einer auseinandergezogenen, geöffneten Stellung und einer aneinanderliegenden, geschlossenen Stellung relativ zueinander linear verstellt werden.

Die Formblöcke weisen auf ihrer dem Mittelblock zugewandten Seite jeweils Außen-Kavitäten auf. Der Mittelblock besitzt auf seinen den äußeren Formblöcken zugewandten Seiten jeweils Innen-Kavitäten, die mit den zugeordneten Außen-Kavitäten der äußeren Formblöcke zusammenwirken. Wenn das Etagenwerkzeug sich in seiner geschlossenen Stellung befindet, bilden die Außen-Kavitäten zusammen mit den zugeordneten Innen-Kavitäten jeweils Formhohlräume, in die der Kunststoff eingespritzt werden kann.

Zwischen dem ersten äußeren Formblock und dem Mittelblock sind erste Formhohlräume gebildet, in denen beispielsweise ein Grundkörper einer Zahnbürste gespritzt wird. Nachdem die Kunststoffmasse in den ersten Formhohlräumen eine ausreichende Festigkeit besitzt, werden die Grundkörper in die zweiten Formhohlräume umgesetzt, die zwischen dem zweiten äußeren Formblock und dem Mittelblock gebildet sind. In den zweiten Formhohlräumen kann dann eine weitere KunststoffKomponente an den Grundkörper angespritzt werden.

Gemäß der DE 101 21 691 A1 ist vorgesehen, die Grundkörper zum Umsetzen zwischen den Formhohlräumen nicht vollständig aus den Kavitäten zu entnehmen, sondern einen Teilbereich der Innen-Kavitäten des Mittelblocks aus verstellbaren Halteteilen auszubilden. Die verstellbaren Halteteile bilden einen Abschnitt der Innen-Kavitäten des Mittelblocks zur Bildung der ersten Formhohlräume und können den in den ersten Formhohlräumen gebildeten Grundkörper der Zahnbürste halten. Nachdem das Etagenwerkzeug geöffnet ist, werden die Halteteile zusammen mit den soeben gespritzten Grundkörpern vom Mittelteil abgehoben und mittels einer endlos umlaufenden Förderkette auf die entgegengesetzte Seite des Mittelteils verbracht und dort in die anderen Innen-Kavitäten zur Bildung der zweiten Formhohlräume eingebaut. Gleichzeitig werden ebenfalls an der Förderkette angebrachte andere Halteteile, die keinen Grundkörper mehr tragen, in die Innen-Kavitäten zur Bildung der ersten Formhohlräume eingebaut. Auf diese Weise sind die Halteteile nacheinander Bestandteil der ersten Formhohlräume und auch der zweiten Formhohlräume und sorgen darüber hinaus für das Umsetzen sowie den Transport der Grundkörper und anschließend der fertig gespritzten Zahnbürste innerhalb der Spritzgießvorrichtung.

Nachteilig bei der genannten Ausgestaltung ist jedoch, dass die umlaufende Transportkette konstruktiv relativ aufwendig und insbesondere störanfällig ist und dass darüber hinaus die Gefahr besteht, dass die Kette bei längerem Betrieb der Spritzgießvorrichtung verschmutzt, wodurch ihre Funktion beeinträchtigt sein kann.

Der Erfindung liegt die Aufgabe zugrunde, eine Spritzgießvorrichtung der genannten Form zu schaffen, mit der in konstruktiv einfacher und platzsparender Weise ein Umsetzen der gespritzten Kunststoffteile zwischen den Formhohlräumen möglich ist.

Diese Aufgabe wird erfindungsgemäß durch eine Spritzgießvorrichtung mit den Merkmalen des Anspruchs 1 gelöst. Dabei ist vorgesehen, dass der Mittelblock zumindest ein drehbares Mittelblockteil, an dem die Halteteile gehalten sind, und zumindest ein nicht-drehbares Mittelblockteil aufweist.

Erfindungsgemäß wird von der Grundüberlegung ausgegangen, den Mittelblock nicht mit einem zusätzlichen umlaufenden Kettenförderer zu versehen, sondern mehrteilig und insbesondere mehrlagig aufzubauen, wobei das die Halteteile tragende Mittelblockteil relativ zu den anderen Mittelblockteilen drehbar ist und dafür sorgt, dass die Halteteile mit ihren Kavitäten, die einen Teilbereich der Innen-Kavitäten des Mittelblocks bilden, nacheinander Teil der ersten und der zweiten Formhohlräume sind.

In bevorzugter Ausgestaltung der Erfindung ist vorgesehen, dass mehrere und insbesondere zwei nicht-drehbare Mittelblockteile vorgesehen sind, zwischen denen das drehbare Mittelblockteil angeordnet ist. Mit der genannten Ausgestaltung ist die Umsetzvorrichtung, die die Halteteile und somit die gespritzten Kunststoffteile zwischen den Formhohlräumen umsetzt, unmittelbarer Bestandteil des Mittelblocks, wodurch der konstruktive Aufwand gering gehalten ist.

Die Ausgestaltung des Mittelblocks mit einem drehbaren Mittelblockteil ermöglicht es des Weiteren, dass das drehbare Mittelblockteil und somit die Halteteile nicht nur in die erste Umfangsposition zur Bildung der ersten Formhohlräume und die zweite Umfangsposition zur Bildung der zweiten Formhohlräume verstellt werden, sondern es können auch weitere Umfangspositionen angefahren werden, in denen zusätzliche Behandlungen oder Maßnahmen an den spritzgegossenen Kunststoffteilen vorgenommen werden. In bevorzugter Ausgestaltung der Erfindung ist vorgesehen, dass das drehbare Mittelblockteil nach dem Öffnen des Etagenwerkzeugs jeweils um 90° gedreht wird, so dass insgesamt vier Umfangspositionen eingestellt werden. Die erste Umfangsposition zur Bildung der ersten Formhohlräume und die zweite Umfangsposition zur Bildung der zweiten Formhohlräume liegen sich bezüglich der Drehachse diametral gegenüber, so dass zwischen der ersten Umfangsposition und der zweiten Umfangsposition eine erste weitere bzw. dritte Umfangsposition und eine zweite weitere bzw. vierte Umfangsposition eingestellt bzw. angefahren werden kann. Nach dem Verlassen der ersten Umfangsposition, in der die erste Kunststoffkomponente gespritzt wird, wird die erste weitere Umfangsposition angefahren, in der eine zusätzliche Arbeitsstation angeordnet sein kann. Bei dieser zusätzlichen Arbeitsstation kann es sich entweder um eine weitere Spritzgießstation handeln, in der eine weitere Kunststoffkomponente gespritzt wird. Alternativ ist es auch möglicht, dass die zusätzliche Arbeitsstation eine Montagestation ist, in der Einzelteile zusammengefügt werden. In einer weiteren alternativen Ausgestaltung kann vorgesehen sein, dass die zusätzliche Arbeitsstation eine Kühlstation ist, in der die in der ersten Umfangsposition gespritzten Kunststoffteile auf eine gewünschte Temperatur zur Weiterverarbeitung gebracht werden. Darüber hinaus ist es möglich, in der zusätzlichen Arbeitsstation eine Beschriftung und/oder Logo bzw. ein Label am Grundkörper der Zahnbürste anzubringen.

Da die Innen-Kavitäten des Mittelblocks in einem Teilbereich an den verstellbaren Halteteilen des drehbaren Mittelblockteils und im übrigen an den nicht-drehbaren Mittelblockteilen ausgebildet sind, ist es notwendig, die gespritzten Kunststoffteile aus den Innen-Kavitäten der nicht-drehbaren Mittelblockteile herauszuheben, um sie durch die Drehung des drehbaren Mittelblockteils in eine andere Umfangsposition bringen zu können. Dies wird erfindungsgemäße dadurch erreicht, dass die Halteteile mittels einer Hubvorrichtung in radialer Richtung zu der Drehachse des drehbaren Mittelblockteils von dessen Oberfläche abhebbar sind.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine Aufsicht auf ein Etagenwerkzeug einer erfindungsgemäßen Spritzgießvorrichtung,
- Fig. 2: eine Vorderansicht des Etagenwerkzeugs gemäß Fig. 1,
- Fig. 3: eine schematische Darstellung des Etagenwerkzeugs in der geschlossenen Darstellung,
- Fig. 4: das Etagenwerkzeug gemäß Fig. 3 nach dem Öffnen,
- Fig. 5: das Etagenwerkzeug gemäß Fig. 4 nach dem Ausfahren der Halteteile und
- Fig. 6: das Etagenwerkzeug gemäß Fig. 5 während der Drehung des drehbaren Mittelblockteils.

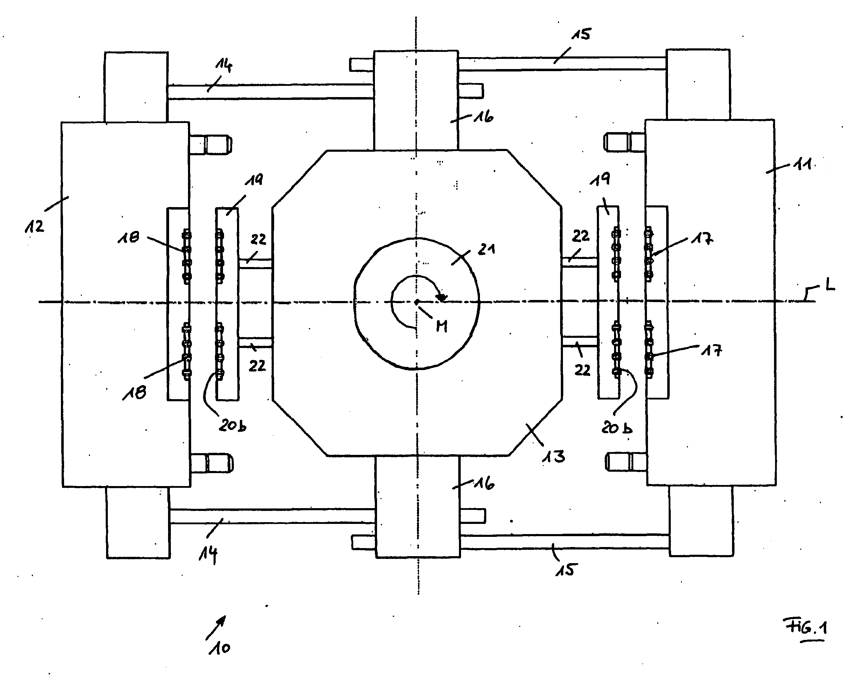

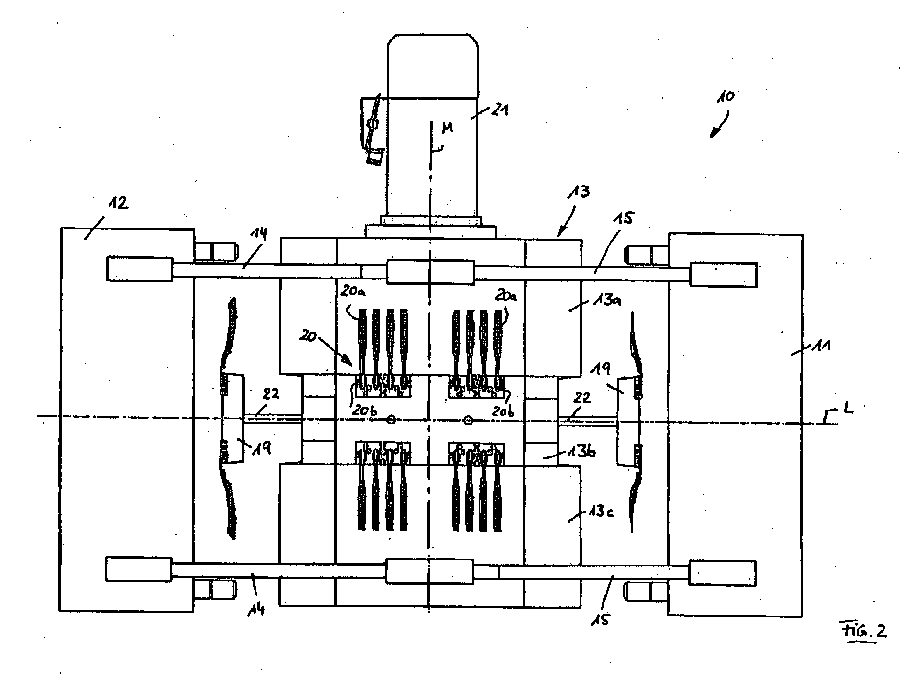

Die Fig. 1 und 2 zeigen ein Etagenwerkzeug 10 einer Spritzgießvorrichtung, das einen ersten äußeren Formblock 11, einen zweiten äußeren Formblock 12 und einen zwischen den beiden Formblöcken 11 und 12 angeordneten Mittelblock 13 aufweist. Der erste Formblock 11 ist ortsfest ausgebildet und besitzt zwei Linearführungen 15, auf denen am Mittelblock 13 angebrachte Führungsteile 16 sitzen. Das Mittelblockteil 13 ist längs der Führungen 15 relativ zum ersten äußeren Formblock 11 entlang einer Horizontalachse L linear verstellbar.

Der zweite äußere Formblock 12 besitzt ebenfalls Linearführungen 14, die die Führungsteile 16 des Mittelblocks 13 durchgreifen. Auf diese Weise kann auch der zweite äußere Formblock 12 relativ zum Mittelblock 13 entlang der Horizontalachse L verstellt werden. In einer geöffneten Stellung des Etagenwerkzeugs 10, die in Fig. 1 dargestellt ist, sind die beiden äußeren Formblöcke 11 und 12 sowie der Mittelblock 13 auseinandergezogen. Zum Schließen des Etagenwerkzeugs 10 werden die beiden äußeren Formblöcke 11 und 12 und der Mittelblock 13 relativ zueinander entlang den Linearführungen 14 und 15 in bekannter Weise linear gegeneinander gefahren.

Wie Fig. 2 zeigt, ist der Mittelblock 13 aus drei vertikal aufeinander angeordneten Mittelblockteilen 13a, 13b und 13c aufgebaut. Das obere Mittelblockteil 13a und das untere Mittelblockteil 13c stehen über die Führungsteile 16 mit den Linearführungen 14 und 15 in Eingriff und sind dadurch drehfest gehalten. Das mittlere Mittelblockteil 13b ist um eine vertikale Drehachse M, die sich senkrecht zur Horizontalachse L erstreckt, drehbar und mittels eines auf der Oberseite des Mittelblocks 13 angeordneten Antriebs insbesondere in Form eines Elektromotors 21 drehangetrieben. Wie Fig. 1 zeigt, besitzt der Mittelblock 13 im Wesentlichen die Querschnittsform eines Quadrates mit weggeschnittenen Ecken, wobei die vier Seiten einen gegenseitigen Winkelversatz von 90° aufweisen. Das drehbare Mittelblockteil 13b kann in Stufen von 90° gedreht werden, wobei in den vier vorgegebenen Umfangspositionen immer jeweils eine Seite einem der äußeren Formblöcke 11 bzw. 12 zugewandt ist.

Der erste äußere Formblock 11 besitzt auf seiner dem Mittelblock 13 zugewandten Seite Außen-Kavitäten 17, die im geschlossenen Zustand des Etagenwerkzeugs 10 im Zusammenwirken mit Innen-Kavitäten 20 des Mittelblocks 13 erste Formhohlräume bilden.

In gleichartiger Weise besitzt der zweite äußere Formblock 12 auf seiner dem Mittelblock 13 zugewandten Seite Außen-Kavitäten 18, die im geschlossenen Zustand des Etagenwerkzeugs 10 im Zusammenwirken mit den Innen-Kavitäten 20 des Mittelblocks 13 zweite Formhohlräume bilden.

Das drehbare Mittelblockteil 13b besitzt auf seinen vier Seiten bzw. Außenoberflächen jeweils leistenartige Halteteile 19, die mittels einer Hubvorrichtung 22 in radialer Richtung zu der Drehachse M des drehbaren Mittelblockteils 13b von dessen Oberflächen abhebbar sind. Die Fig. 1 und 2 zeigen die abgehobene bzw. ausgefahrene Stellung der Halteteile 19.

Die Innen-Kavitäten 20 des Mittelblocks 13 sind jeweils in einem Teilbereich 20b an den Halteteilen 19 und in einem weiteren Teilbereich 20a an den nicht-drehbaren Mittelblockteilen 13a bzw. 13c ausgebildet. Bei dem in den Fig. 1 und 2 dargestellten Ausführungsbeispiel ist das Etagenwerkzeug 10 zur Herstellung von Zahnbürsten ausgelegt. Dabei formt der in den nicht-drehbaren Mittelblockteilen 13a und 13c ausgebildete Teilbereich 20a der Innen-Kavitäten 20 den Griff der Zahnbürste, während der an den Halteteilen 19 ausgebildete Teilbereich 19b der Innen-Kavitäten 20 den Zahnbürstenkopf formt.

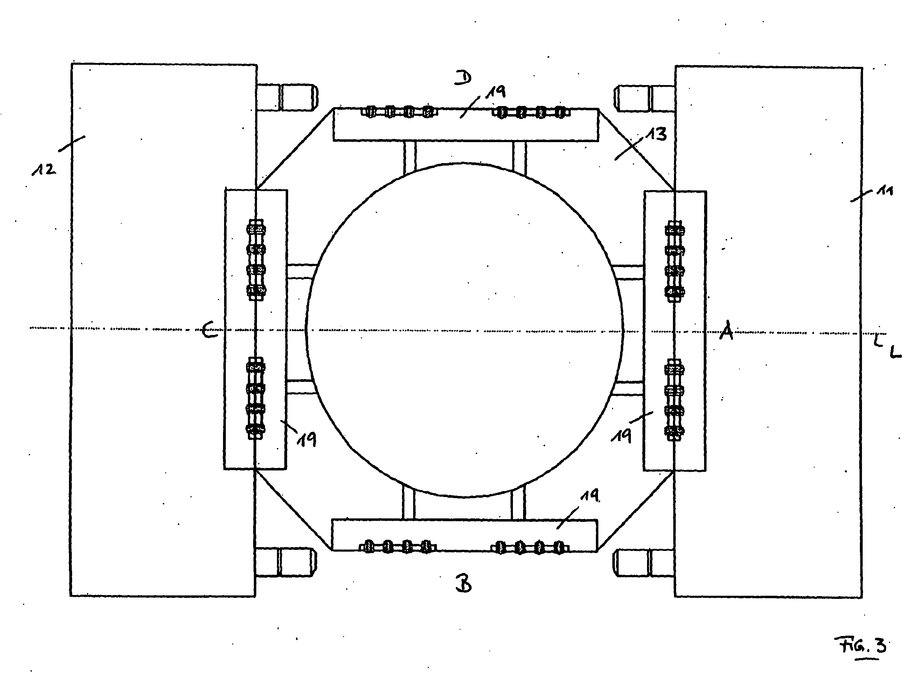

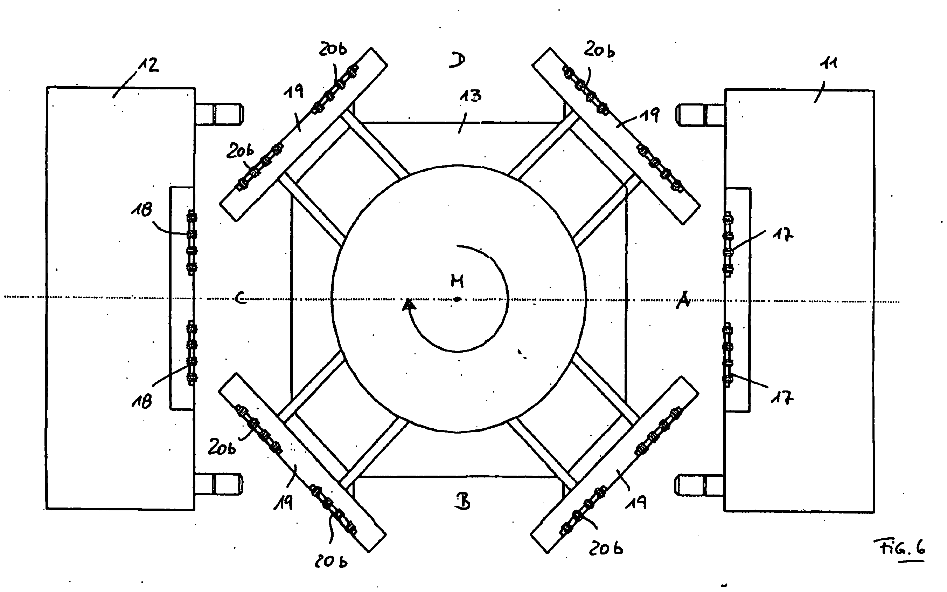

Im Folgenden soll ein Arbeitszyklus der Spritzgießvorrichtung anhand der Figuren 3 bis 6 im Einzelnen erläutert werden.

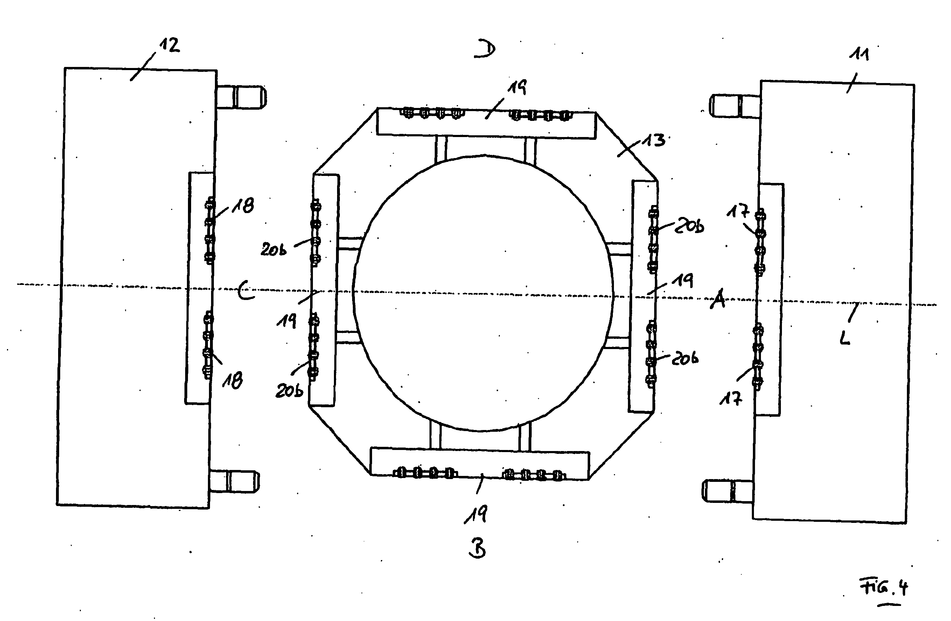

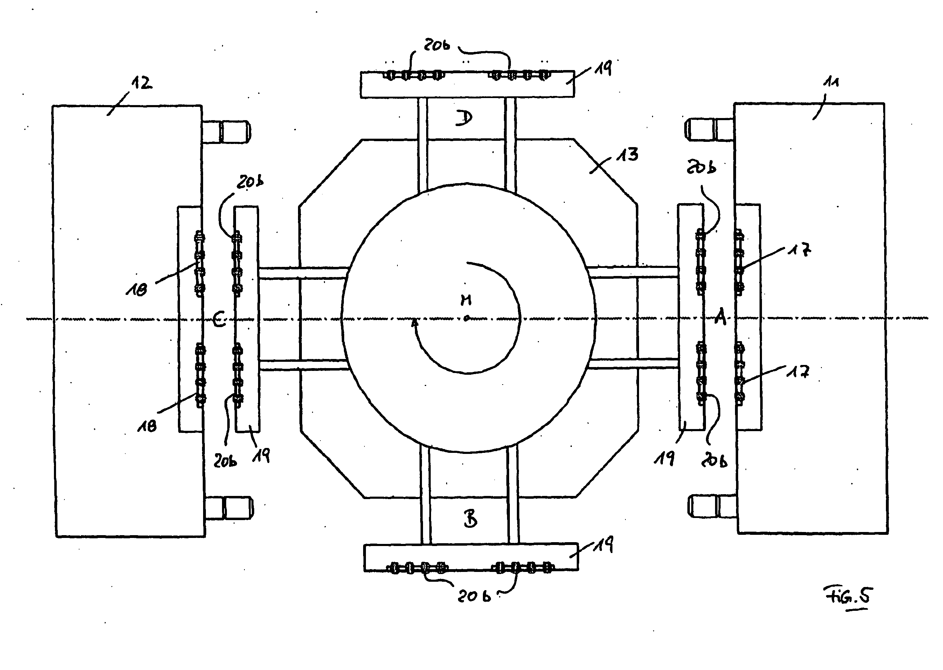

Fig. 3 zeigt das Etagenwerkzeug 10 in geschlossener Stellung. Da das drehbare Mittelblockteil 13b um jeweils 90° verstellbar bzw. drehbar ist, sind vier Umfangspositionen A, B, C und D definiert, an denen Arbeitsvorgänge stattfinden können. In der in Fig. 3 dargestellten Ausgangsstellung sind in der ersten Umfangsposition A zwischen dem ersten äußeren Formblock 11 und dem Mittelblock 13 die ersten Formhohlräume gebildet, in denen Grundkörper der Zahnbürsten gespritzt werden. Nachdem die Grundkörper eine ausreichende Grundfestigkeit erreicht haben, wird das Etagenwerkzeug 10 geöffnet, indem die äußeren Formblöcke 11 und 12 und der Mittelblock 13 linear entlang der Horizontalachse L auseinanderfahren. Die geöffnete Stellung ist in Fig. 4 dargestellt. Anschließend werden die Halteteile 19 von den seitlichen Oberflächen des Mittelblocks 13 abgehoben, indem sie in radialer Richtung zu der vertikalen Drehachse M des drehbaren Mittelblockteils 13b ausgefahren werden. In den Halteteilen 19 sind die in der ersten Umfangsposition A bzw. den ersten Formhohlräumen gespritzten Grundkörper der Zahnbürsten gehalten, so dass diese ebenfalls von der seitlichen Oberfläche des Mittelblocks 13 abgehoben werden. Die abgehobene Stellung der Halteteile 19 ist in Fig. 5 gezeigt und auch aus den Fig. 1 und 2 ersichtlich.

Anschließend wird das drehbare Mittelblockteil 13b um 90° gedreht, so dass die vorher in der ersten Umfangsposition A angeordneten Halteteile 19 dann in der ersten weiteren Umfangsposition B angeordnet sind. Anschließend werden die Halteteile 19 wieder in den Mittelblock 13 eingefahren und das Etagenwerkzeug 10 wird geschlossen, so dass wieder die Ausgangsposition gemäß Fig. 3 erreicht ist.

Die Halteteile 19 durchlaufen in der genannten Weise die vier Umfangspositionen A, B, C und D. In der Umfangsposition A werden die Grundkörper der Zahnbürsten gespritzt. In der gegenüberliegenden Umfangsposition C wird eine zweite Kunststoffkomponente in den zweiten Formhohlräumen an die Grundkörper angespritzt. In der dazwischenliegenden Umfangsposition B kann entweder eine weitere Spritzgießstation oder eine Montagestation oder eine Kühlstation angeordnet sein. In der Umfangsposition D kann eine Belade- bzw. Entnahmestation angeordnet sein, an der die Zahnbürsten aus dem Etagenwerkzeug entnommen werden.

## Patentansprüche

1. Spritzgießvorrichtung mit einem Etagenwerkzeug (10), das einen ersten äußeren Formblock (11), einen Mittelblock (13) und einen zweiten äußeren Formblock (12) aufweist, die zwischen einer geschlossenen Stellung und einer geöffneten Stellung relativ zueinander linear verstellbar sind, wobei die Formblöcke (11, 12) auf ihrer dem Mittelblock (13) zugewandten Seite jeweils Außen-Kavitäten (17, 18) aufweisen, die im Zusammenwirken mit Innen-Kavitäten (20), die auf Außenseiten des Mittelblocks (13) ausgebildet sind, erste und zweite Formhohlräume bilden, wobei ein Teilbereich (20b) der Innen-Kavitäten (20) des Mittelblocks (13) an verstellbaren Halteteilen (19) ausgebildet ist, die mittels einer Antriebsvorrichtung (21) in Umfangsrichtung des Mittelblocks (13) zumindest zwischen einer ersten Umfangsposition (A), in der sie mit den Außen-Kavitäten (17) des ersten äußeren Formblocks (11) zur Bildung der ersten Formhohlräume zusammenwirken, und einer zweiten Umfangsposition (C) verstellbar sind, in der sie mit den Außen-Kavitäten (18) des zweiten äußeren Formblocks zur Bildung der zweiten Formhohlräume (12) zusammenwirken, **dadurch gekennzeichnet, dass** der Mittelblock (13) zumindest ein um eine Drehachse (M) drehbares Mittelblockteil (13b), an dem die Halteteile (19) gehalten sind, und zumindest ein nicht-drehbares Mittelblockteil (13a, 13c) aufweist, an dem ein weiterer Teilbereich (20a) der Innen-Kavitäten (20) des Mittelblocks (13) ausgebildet ist, und dass die Halteteile (19) mittels einer Hubvorrichtung (22) in radialer Richtung zu der Drehachse (M) des drehbaren Mittelblockteils (13b) von dessen Oberfläche abhebbar sind, so dass die gespritzten Kunststoffteile aus den Innen-Kavitäten (20) des nicht-drehbaren Mittelblockteils (13a, 13b) heraushebbar sind.

2. Spritzgießvorrichtung nach Anspruch 1, **dadurch gekennzeichnet, dass** mehrere nicht-drehbare Mittelblockteile (13a, 13c) vorgesehen sind, zwischen denen das drehbare Mittelblockteil (13b) angeordnet ist.

3. Spritzgießvorrichtung nach einem der Ansprüche 1 oder 2, **dadurch gekennzeichnet, dass** das drehbare Mittelblockteil (13b) mit den Halteteilen (19) in zumindest drei Umfangspositionen (A, B, C) und insbesondere in vier Umfangspositionen (A, B, C, D) verstellbar ist.

4. Spritzgießvorrichtung nach Anspruch 3, **dadurch gekennzeichnet, dass** in einer ersten weiteren Umfangsposition (B) der Halteteile (19) eine zusätzliche Spritzgießstation oder eine Montagestation oder eine Kühlstation angeordnet ist.

5. Spritzgießvorrichtung nach Anspruch 3 oder 4, **dadurch gekennzeichnet, dass** in einer zweiten weiteren Umfangsposition (D) der Halteteile (19) eine Belade- und Entladestation angeordnet ist.

## Claims

1. Injection molding apparatus having a multi-stage tool (10) comprising a first outer molding block (11), a middle block (13) and a second outer molding block (12) which can be adjusted relative to each other in a linear fashion between a closed position and an opened position, wherein the molding blocks (11, 12) each have outer cavities (17, 18) on sides thereof facing the middle block (13) which cooperate with inner cavities (20) formed on the outer side of the middle block (13) to constitute first and second molding cavities, wherein a partial region (20b) of the middle block (13) is formed on displaceable adjustable holding members (19) which can be adjusted by means of a drive mechanism (21) in the peripheral direction of the middle block (13) a least between a first peripheral position (A) in which they cooperate with the outer cavities (17) of the first outer molding block (11) to constitute the first molding cavities and a second peripheral position (C) in which they cooperate with the outer cavities (18) of the second outer molding block to form the second molding cavities (12), **characterized in that** the middle block (13) has at least one middle block component (13b) which can rotate about a rotational axis (M) and at which the holding members (19) are supported as well as at least one non-rotatable middle block component (13a, 13c) at which a further partial region (20a) of the inner cavities (20) of the middle block (13) is formed, and that the holding members (19) can be displaced by means of a displacement drive (22) in a radial direction relative to the rotational axis (M) of the rotatable middle block component (13) away from it's surface so that the injection molded plastic parts can be displaced out of the inner cavities (20) of the non-rotatable middle block component (13a, 13b).

2. Injection molding apparatus of claim 1, **characterized in that** a plurality of non-rotatable middle block components (13a, 13c) are provided between which the rotatable middle block component (13b) is disposed.

3. Injection molding apparatus according to any one of the claims 1 or 2, **characterized in that** the rotatable middle block component (13b) having the holding members (19) can be adjusted into at least three peripheral positions (A, B, C) and, in particular, into four peripheral positions (A, B, C, D).

4. Injection molding apparatus according to claim 3, **characterized in that** an additional injection molding apparatus, an assembly station, or a cooling station is disposed in one first additional peripheral position (B) of the holding member (19).

5. Injection molding apparatus of claim 3 or 4, **characterized in that** a loading and removing station is disposed at a second additional peripheral position (D) of the holding member (19).

## Revendications

1. Dispositif de moulage par injection comprenant un outil à étages (10) présentant un bloc de moulage extérieur (11), un bloc médian (13) et un deuxième bloc de moulage extérieur (12), réglables linéairement entre une position fermée et une position ouverte les uns par rapport aux autres, les blocs de moulage (11, 12) présentant chacun, sur leurs faces en regard du bloc médian (13), des cavités extérieures (17, 18) qui, en coopération avec des cavités intérieures (20) conformées sur des faces extérieures du bloc médian (13), forment des premières et deuxième empreintes, une zone partielle (20b) des cavités intérieures (20) du bloc médian (13) étant formée sur des pièces de maintien (19) réglables, qui peuvent être déplacées au moyen d'un dispositif d'entraînement (21) en direction périphérique du bloc médian (13) au moins entre une première position périphérique (A), dans laquelle elles coopèrent avec les cavités extérieures (17) du premier bloc de moulage extérieur (11) pour former des premières empreintes, et une deuxième position périphérique (C), dans laquelle elles coopèrent avec les cavités extérieures (18) du deuxième bloc de moulage extérieur pour former les deuxièmes empreintes (12), **caractérisé en ce que** le bloc médian (13) présentant au moins un élément de bloc médian (13b) pivotant autour d'un axe de pivotement (M) sur lequel son maintenues les pièces de maintien (19), et au moins un élément de bloc médian (13a, 13c) non pivotant, sur lequel une autre zone partielle (20a) des cavités intérieures (20) du bloc médian (13) étant formée, et **en ce que** les pièces de maintien (19) peuvent être enlevées de la surface de l'élément de bloc médian (13b) pivotant au moyen d'un mécanisme élévateur (22) en direction radiale par rapport à l'axe de pivotement (M), de façon que les pièces moulée par injection en matière plastique peuvent être dégagées des cavités intérieures (20) de l'élément de bloc médian non pivotant (13a, 13b).

2. Dispositif de moulage par injection selon la revendication 1, **caractérisé en ce que** l'on prévoit plusieurs éléments de bloc médian non pivotants (13a, 13c), entre lesquels est dispose l'élément de bloc médian (13b) pivotant.

3. Dispositif de moulage par injection selon la revendication 1 on 2, **caractérisé en ce que** l'élément de bloc médian pivotant (13b) peut être déplacé avec les éléments de maintien (19) dans au moins trios positions périphériques (A, B, C), et plus particulièrement dans quatre positions périphériques (A, B, C, D).

4. Dispositif de moulage par injection selon revendication 3, **caractérisé en ce que** dans une première position périphérique supplémentaire (B) des pièces de maintien (19) on dispose une station de moulage par injection supplémentaire ou une station de montage ou une station de refroidissement.

5. Dispositif de moulage par injection selon la revendication 3 on 4, **caractérisé en ce que** dans une deuxième position périphérique supplémentaire (D) des pièces de maintien (19) on dispose une station de chargement-déchargement.
